# EUROPEAN PATENT APPLICATION

(11) **EP 2 775 185 A1**
(43) Date of publication of application: **10.09.2014**
(21) Application number: 14157046.5
(22) Date of filing: 27.02.2014
(51) Int. Cl.: F16L 19/02, F16L 19/025

(54) **Connector for pump assembly**

(30) Priority: 04.03.2013 IT PD20130009 U
(71) Applicant: Dab Pumps S.p.A., 35035 Mestrino (Padova) (IT)
(72) Inventor: Iacoponi, Alessandro, Frazione S. Lorenzo a Pagnatico 56021 Cascina (PI) (IT); Sinico, Francesco, 36075 Montecchio Maggiore VI (IT)
(74) Representative: Modiano, Micaela Nadia

(57) **Abstract**

A connector (10, 110) for a pump assembly (13, 113) which connects a first tubular element (11, 111) with a second tubular element (12, 112), the first having a first end portion (14, 114) and being rendered integral at the other end thereof with a first component (15, 115) of the pump assembly (13, 113), the second having a second end portion (16, 116) and being rendered integral at the other end thereof with a second component (17, 117), such tubular elements, first (11, 111) and second (12, 112), being connected by way of a ring (18, 118) that surrounds the first tubular element (11, 111) and is threaded internally in order to be screwed onto the second end portion (16, 116), which is threaded externally.

## Description

The present invention relates to a connector for a pump assembly.

Nowadays the use is widespread of pumping assemblies for feeding a plumbing system, which comprise a pump body associated with a driving inverter and an accumulation tank that acts as a lung for the delivery, such as for example an expansion tank.

As is known, the pump body and the accumulation tank are elements that are passed through by the liquid to be pumped into the system and for this reason they must be connected with adapted contrivances and by way of particular means that ensure a seal.

The connection occurs by way of associating tubular elements that are integral with the tank body and the accumulation tank, with the aid of various different connector elements and fixing means, such as gaskets, screws, bolts, etc., for example with a flange coupling of the two tubular portions using a certain number of bolts.

Such operations are therefore long and occasionally complex for the installation technician, who is forced to manually keep the parts to be associated in their final positions for the entire connection operation.

The aim of the present invention is to provide a connector for the rapid connection of components of a pump assembly which are passed through by liquid.

Within this aim, an object of the invention is to provide a connector that simplifies the operations of assembling the pump assembly for the installation technician, while at the same time ensuring the seal of the connection.

This aim and this and other objects which will become better evident hereinafter are achieved by a connector for a pump assembly which is characterized in that it connects a first tubular element with a second tubular element, the first having a first end portion and being rendered integral at the other end thereof with a first component of said pump assembly, the second having a second end portion and being rendered integral at the other end thereof with a second component, said tubular elements, first and second, being connected by way of a ring that surrounds said first tubular element and which is threaded internally in order to be screwed onto said second end portion, which is threaded externally.

Further characteristics and advantages of the invention will become better apparent from the description of two preferred, but not exclusive, embodiments of the connection according to the invention, which are illustrated by way of non-limiting example in the accompanying drawings wherein:
Figure 1 is an exploded perspective view of a first embodiment of the connector according to the invention, with the components of the pump assembly to be connected;
Figure 2 is an enlarged cross-sectional view of the connector according to the invention;

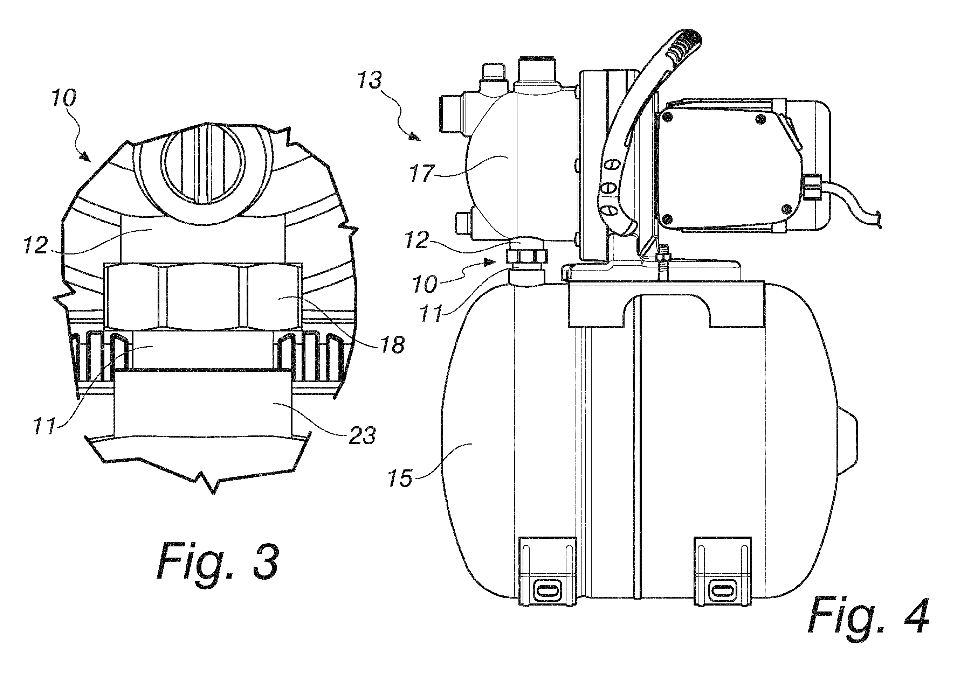

Figure 3 is another enlarged view of the connector according to the invention;
Figure 4 is a side view of the pump assembly with components connected using the connector according to the invention;
Figure 5 is an exploded perspective view of a second embodiment of the connector according to the invention, with the components of the pump assembly to be connected;
Figure 6 is an enlarged cross-sectional view of the connector, again in the second embodiment;
Figure 7 is another enlarged view of the connector according to the invention in the second embodiment;
Figure 8 is a side view of the pump assembly with components connected using the connector according to the invention, again in the second embodiment proposed.

With reference to the first four figures, the connector according to the invention, which is generally designated in the first embodiment thereof with the reference numeral 10, is used to integrally connect two tubular elements 11 and 12, which in turn are each rendered integral with a component of a pump assembly 13.

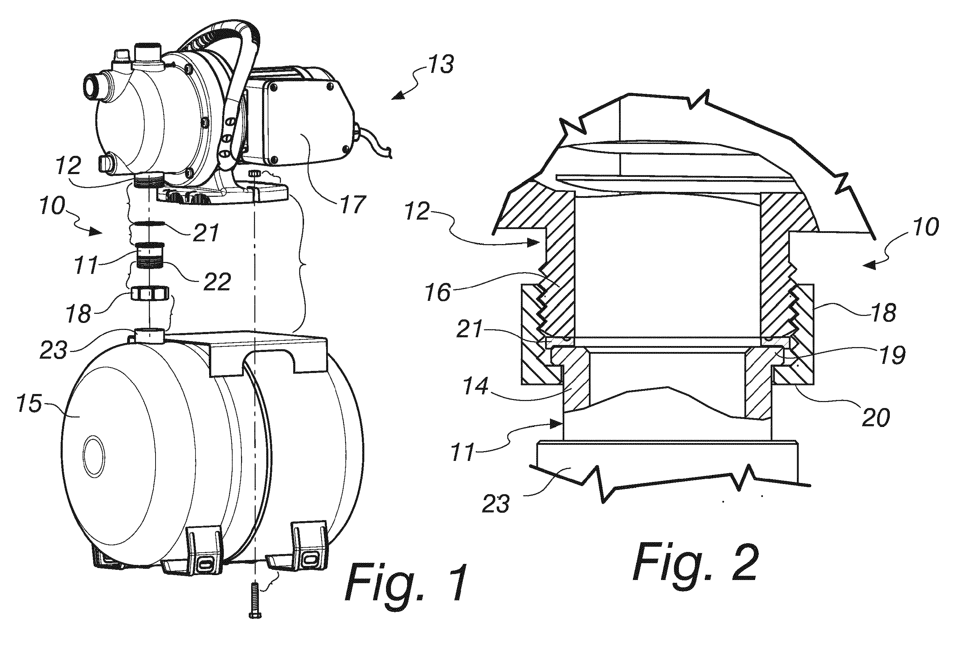

In particular, as shown in Figure 2, a first tubular element 11 has a respective first end portion 14 and at the other end thereof is rendered integral with a first component 15 of the pump assembly 13, in this case with an accumulation tank.

Similarly, a second tubular element 12 has a second end portion 16 and is integral at the other end thereof with a second component 17 of the pump assembly 13, i.e. an electric pump, and consists substantially of a hollow stub pipe that protrudes from the wall thereof.

The two tubular elements 11 and 12 are connected by way of a ring 18 that surrounds the first tubular element 11 and is threaded internally in order to be screwed onto the second end portion 16, which is threaded externally.

As can clearly be seen in the cross-sectional enlargement in Figure 2, the first end portion 14 has a region with a larger diameter which creates an abutment shoulder 19 for an internal circular ridge 20 of the ring 18 when it is screwed onto the second end portion 16.

As shown in the first two figures, the connector 10 conveniently also comprises a circular gasket 21, in the form of a flat ring, to be interposed between the two ends of the first end portion 14 and of the second end portion 16.

In other versions the circular gasket 21 can consist of an O-ring that surrounds the first end portion 14 at a circular groove defined on the region of greater diameter.

As shown in Figure 1, the first tubular element 11 has, at the other end from the end with the first end portion 14, an external threading 22 by way of which it is screwed into a first stub pipe 23 that is threaded internally and which protrudes from the first component 15.

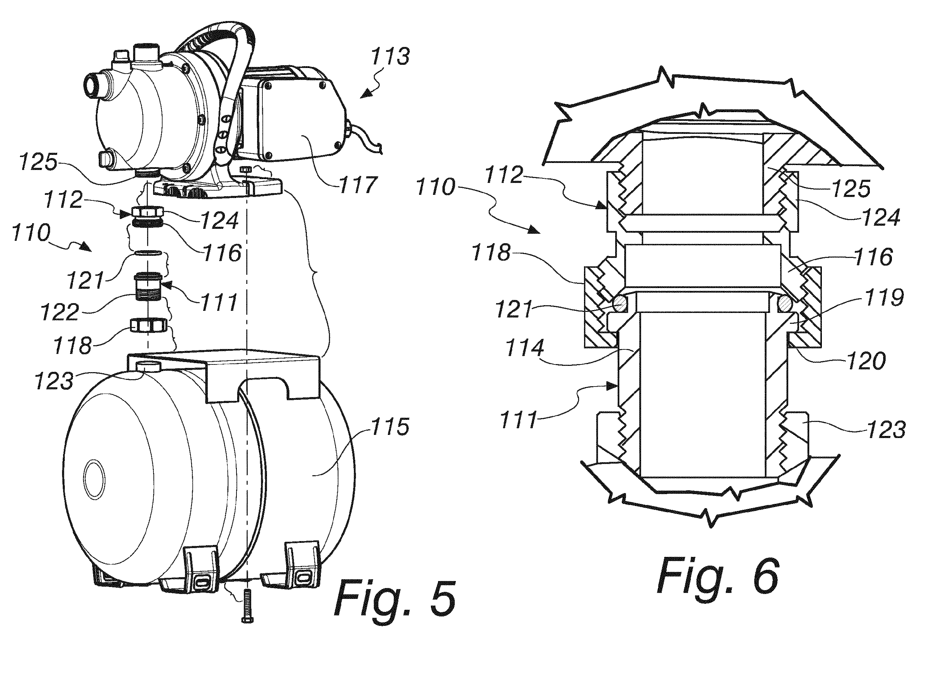

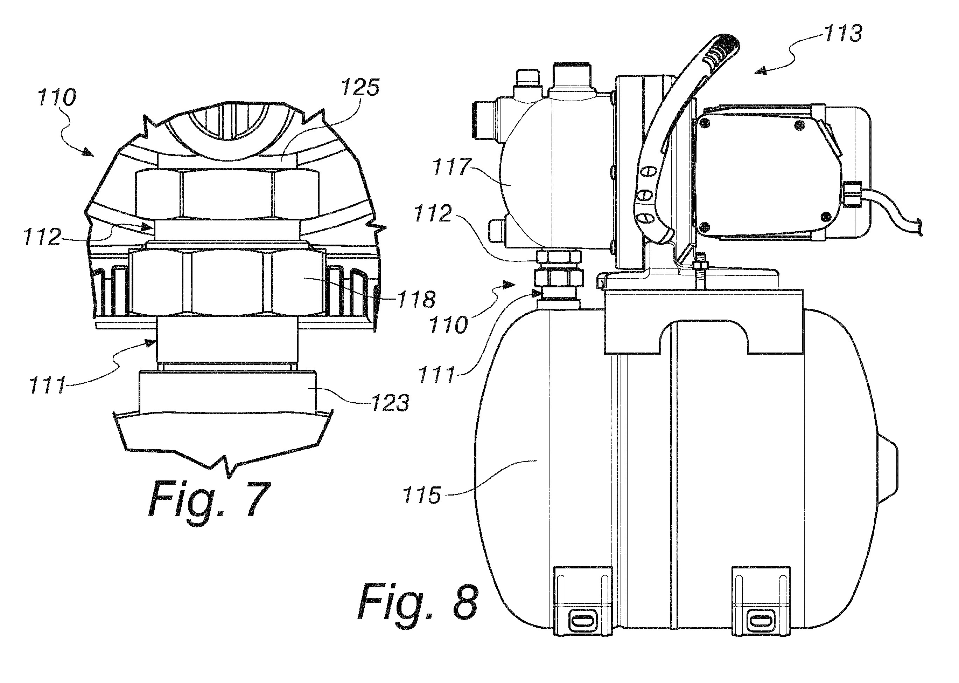

In the second embodiment, the connector according to the invention is generally designated by the reference numeral 110 and is shown in Figures 5 to 8.

In this case also, the connector 110 is used to integrally connect a first tubular element 111 with a second tubular element 112, which in turn are each rendered integral with a component of a pump assembly 113.

The first tubular element 111 is substantially the same as the previous one described for the first embodiment. In fact it also has a first end portion 114 and at the other end it is rendered integral with a first component 115, i.e. an accumulation tank of the pump assembly 113.

In particular, the first tubular element 111 has, at the other end from the end with the first end portion 114, an external threading 122 by way of which it is screwed into a first stub pipe 123 that is threaded internally and which protrudes from the first component 115.

The second tubular element 112 also has a second end portion 116 and is rendered integral at the other end thereof with a second component 117 of the pump assembly 113, an electric pump. However, differently from the previous embodiment, the second tubular element 112 is not directly associated with the electric pump because it is not a stub pipe: instead it has, at the other end from that of the second end portion 116, an internally threaded portion 124 with which it is integrally associated by screwing onto a second stub pipe 125 that is threaded externally and which protrudes from the second component 117.

In their turn, two tubular elements 111 and 112 are connected by way of a ring 118 that surrounds the first tubular element 111 and is threaded internally in order to be screwed onto the second end portion 116, which is threaded externally.

As can clearly be seen in the cross-sectional enlargement in Figure 6, the first end portion 114 has a region with a larger diameter which creates an abutment shoulder 119 for an internal circular ridge 120 of the ring 118 when it is screwed onto the second end portion 116.

From the exploded view in Figure 5 and also from the cross-section in Figure 6, it can be seen that the connector 110 conveniently also comprises a circular gasket 121 that is to be interposed between the first end portion 114 and the second end portion 116.

In particular, the circular gasket 121 is of the 0-ring type and is arranged in a circular groove that conveniently is defined on the first end portion 114.

In other similar connectors the circular gasket 121 can instead consist of a flat ring to be interposed between the two ends, as described in the previous embodiment.

Use of the connector according to the invention is the following.

The ring 18 is associated with the first tubular element 11 by fitting it over the other end from that of the first end portion 14 and the first tubular element 11 is subsequently rendered integral with the tank, i.e. with the first component 15, by screwing it to the first stub pipe 123. The joining of the two components 15 and 17 occurs by connecting the first tubular element 11 with the second 12, interposing the circular gasket 21 between the first end portion 14 and the second end portion 16. Subsequently the ring 18 is tightened onto the second end portion 16.

In the second embodiment of the connector 110, the ring 118 is associated with the first tubular element 111 and this is rendered integral with the tank in the manner described for the first embodiment of the connector 10. The circular gasket 121, which in this case is a gasket of the O-ring type, is inserted in the adapted circular groove that is defined on the first end portion 114.

The second tubular element 112 is screwed onto the second stub pipe 125.

The joining of the two components of the pump assembly 113 occurs by connecting the first tubular element 111 with the second 112, by bringing the two respective end portions 114 and 116 together and screwing the ring 118 onto the second of these portions.

It should be noted that, according to both of the solutions proposed for the connection of components, the connector 10 and 110 makes use of an extremely reduced number of elements, thus facilitating the assembly operations of the pump assembly, 13 or 113, for the installation technician, and reducing the necessary time therefor.

In practice it has been found that the invention fully achieves the set aim and object by providing a connector for the rapid and easy connection of components of a pump assembly that are passed through by liquid, while conveniently being able at the same time to ensure the seal of the connection.

In practice the materials employed, provided they are compatible with the specific use, and the dimensions, may be any according to requirements and to the state of the art.

The disclosures in Italian Utility Model Application No. PD2013U000009 from which this application claims priority are incorporated herein by reference.

Where technical features mentioned in any claim are followed by reference signs, such reference signs have been inserted for the sole purpose of increasing the intelligibility of the claims and accordingly such reference signs do not have any limiting effect on the interpretation of each element identified by way of example by such reference signs.

## Claims

1. A connector (10, 110) for a pump assembly (13, 113) which is **characterized in that** it connects a first tubular element (11, 111) with a second tubular element (12, 112), the first having a first end portion (14, 114) and being rendered integral at the other end thereof with a first component (15, 115) of said pump assembly (13, 113), the second having a second end portion (16, 116) and being rendered integral at the other end thereof with a second component (17, 117), said tubular elements, first (11, 111) and second (12, 112), being connected by way of a ring (18, 118) that surrounds said first tubular element (11, 111) and which is threaded internally in order to be screwed onto said second end portion (16, 116), which is threaded externally.

2. The connector according to claim 1, **characterized in that** it comprises a circular gasket (21, 121) to be interposed between said first end portion (14, 114) and said second end portion (16, 116).

3. The connector according to claim 1, **characterized in that** said first end portion (14, 114) has a region with a larger diameter which creates an abutment shoulder (19, 119) for an internal circular ridge (20, 120) of said ring (18, 118) when it is screwed onto said second end portion (16, 116).

4. The connector according to claim 1, **characterized in that** said first tubular element (11, 111) has, at the other end from the end with said first end portion (14, 114), an external threading (22, 122) by way of which it is screwed into a first stub pipe (23, 123) that is threaded internally and which protrudes from said first component (15, 115).

5. The connector according to claim 1, **characterized in that** said second tubular element (112) has, at the other end from that of said second end portion (116), an internally threaded portion (124) with which it is integrally associated by screwing onto a second stub pipe (125) that is threaded externally and which protrudes from said second component (117).
